# EUROPÄISCHE PATENTSCHRIFT

(11) **EP 3 238 876 B1**
(45) Veröffentlichungstag und Bekanntmachung des Hinweises auf die Patenterteilung: **11.09.2019**
(21) Anmeldenummer: 16167809.9
(22) Anmeldetag: 29.04.2016
(51) Int. Cl.: B23Q 39/02, B27C 9/00, B27M 1/08

(54) **VORRICHTUNG ZUM BEARBEITEN VON STANGENFÖRMIGEN WERKSTÜCKEN WIE FENSTERPROFILE ODER TÜRPROFILE**
DEVICE FOR MACHINING WORKPIECES IN ROD FORM SUCH AS WINDOW PROFILES OR DOOR PROFILES
DISPOSITIF DE TRAITEMENT DE PIECES USINEES EN FORME DE TIGES TELLES QUE PROFILES DE FENETRE OU DE PORTE

(43) Veröffentlichungstag der Anmeldung: 01.11.2017
(73) Patentinhaber: Schirmer Maschinen GmbH, 33415 Verl (DE)
(72) Erfinder: Vogt, Roland, 33415 Verl (DE)
(74) Vertreter: Pellengahr, Maximilian Rudolf

(56) Entgegenhaltungen:
- EP-A1- 3 141 337
- DE-A1- 10 027 509
- DE-A1- 10 348 442
- IT-A1- PD20 080 385
- JP-A- H0 724 677

## Beschreibung

### Technisches Umfeld

Die Erfindung betrifft eine Vorrichtung zum Bearbeiten von stangenförmigen Werkstücken wie Fensterprofile oder Türprofile, die mittels einer Transporteinrichtung in wenigstens einer horizontalen Ebene bewegbar sind und wobei in einer im Wesentlichen senkrecht angeordneten Ebene zur Bewegungsrichtung der Werkstücke eine Bearbeitungseinrichtung mit Werkzeugen vorgesehen ist, die in der senkrechten Ebene in Bezug zum Werkstück räumlich ausgerichtet ist, wobei die Bearbeitungseinrichtung aus einem Teilkreissegment besteht, an dessen Teilkreisbögen die Werkzeuge verfahrbar angeordnet sind (siehe z.B. IT PD 20 080 385 A1).

### Stand der Technik

Bei der Bearbeitung von Profilen, die zur Herstellung von Türen oder Fenstern verwendet werden, sind zahlreiche unterschiedliche Arbeitsvorgänge durchzuführen. Solche Profile können aus Kunststoff, Metall oder Holz bestehen. Auch eine Kombination verschiedener Materialien ist möglich. Wenn z. B. Kunststoffhohlprofile für Fenster bearbeitet werden, müssen Entwässerungsschlitze schräg in den Falz und/oder nach unten und/oder nach vorne gefräst werden. Außerdem sind Schließteilpositionsbohrungen an einem Blendrahmenprofil und/oder an einem Kämpferprofil zu setzen. Weiterhin müssen ggf. Schlosskästen ausgefräst werden. Mittelschrauben für Rollläden, Führungsleisten und Wetterschenkel müssen ebenfalls verbaut werden. Ferner sind im Flügellagerüberschlag Eckbandbohrungen vorzusehen. Übliche Durchmesser für Entwässerungs- und Belüftungsschlitze sind hier beispielsweise 5 mm, während die Schließteilbohrungen sowie die Eckbandbohrungen immer einen Durchmesser von 3 mm aufweisen. Um diese unterschiedlichen Bohrungen und Ausfräsungen durchführen zu können, sind verschiedene Bearbeitungswerkzeuge wie Bohrer oder Fräser in unterschiedlichen Größen erforderlich.

Bei einer automatisierten Bearbeitung entfällt die Möglichkeit, z. B. bei einem einzigen Bohrer die Bohreinsätze auszuwechseln, weil der Aufwand hierfür zu groß wäre. Einfacher ist es, von vornherein Bohrer mit jeweils unterschiedlichen Einsätzen oder unterschiedliche Bohr- und Fräswerkzeuge vorzusehen.

Um diesem Bearbeitungsaufwand gerecht zu werden und hier möglichst eine automatisierte Bearbeitung bereitzustellen, ist aus der DE 197 25 043 A1 eine Vorrichtung zum Bearbeiten von Bauelementen bekannt. Die bekannte Vorrichtung verfügt hierbei über eine im Wesentlichen senkrecht angeordnete Ebene zur Bewegungsrichtung der Bauelemente verlaufende Bearbeitungseinrichtung mit ihren Bearbeitungsgeräten, die in Bezug zum Werkstück räumlich ausgerichtet sind. Die Bearbeitungswerkzeuge befinden sich hierbei auf einem Trägerelement, so dass die auf dem Trägerelement vorgesehenen Bearbeitungswerkzeuge entsprechend durch Verfahren des jochartigen Trägerelementes zu dem in der Transportrichtung vorgesehenen Werkstück in Bearbeitung gelangen. Eine weitere Vorrichtung ist aus der später veröffentlichten (Art. 54(3) EPÜ) EP3141337A1 bekannt, welche zwei in X-, Y- und Z-Richtung verfahrbare Teilkreissegmente offenbart, an dessen Teilkreisbögen Werkzeuge verfahrbar sind.

Bei beiden bekannten Ausführungsformen wird es als nachteilig angesehen, dass die an dem Trägerelement vorgesehenen Bearbeitungswerkzeuge, was die flexible Bearbeitung am Werkstück angeht sowie hinsichtlich der Bearbeitungsgeschwindigkeit am Werkstück, noch wesentlich verbesserungswürdig sind.

### Problem

Der Erfindung liegt somit das Problem zugrunde, eine Vorrichtung zum Bearbeiten von stangenförmigen Werkstücken der Art weiterzubilden, welche hinsichtlich der Bearbeitung des Werkstücks einerseits eine höhere Prozesssicherheit gewährleistet unter Bereitstellung einer schonenden Oberflächenbehandlung, wobei insbesondere auch die Bearbeitungszeit des Werkstücks wesentlich verkürzt werden soll. Zudem soll der Bearbeitungszugang des Bearbeitungswerkzeugs zu dem Werkstück auf der Transporteinrichtung wesentlich flexibler gehalten werden.

### Lösung

Erfindungsgemäß wird das Problem mit den Merkmalen des Hauptanspruchs gelöst. Vorteilhafte Ausgestaltungen und Weiterbildungen der Erfindung ergeben sich aus den Unteransprüchen.

Die mit der Erfindung erreichten Vorteile bestehen darin, dass mit der erfindungsgemäßen Vorrichtung zum Bearbeiten die Zugangsrichtungen der Bearbeitungswerkzeuge in der senkrechten Ebene in Bezug zu dem transportierten Werkstück wesentlich flexibler gestaltet werden, da die Bearbeitungswerkzeuge auf zwei Teilkreisbahnen gegenüber dem zu transportierenden Werkstück verfahrbar angeordnet sind. Die hohe Flexibilität und die Reduzierung der Bearbeitungszeit wird im Wesentlichen dadurch erreicht, dass die beiden Teilkreissegmente, an denen die Bearbeitungswerkzeuge vorgesehen sind, unabhängig voneinander verfahren werden können, so dass beidseits des Werkstücks eine Parallelbearbeitung stattfinden kann. Hierzu besteht die Bearbeitungseinrichtung aus zueinander verstellbar angeordneten Teilkreissegmenten, an deren Teilkreisbogen die Werkzeuge verfahrbar sind. Die einzelnen Teilkreissegmente sind jeweils in der X-, Y- und Z-Richtung unabhängig voneinander verfahrbar im Vorrichtungsgestell. Somit besteht die Möglichkeit, dass in einem Winkel zum Werkstück und hier in unterschiedlichen Winkellagen das Fräs- oder Bohrwerkzeug am Werkstück eingreifen kann. Dabei besteht aufgrund der beiden unabhängig voneinander verfahrbaren Teilkreissegmente in räumlicher Lage nun die Möglichkeit, dass die Bearbeitung beidseits an unterschiedlichen Angriffspunkten am Werkstück erfolgen kann, sodass dadurch die Bearbeitungszeit an einem Werkstück halbiert wird.

In Weiterbildung der Erfindung ist es von besonderem Vorteil, dass das eine Teilkreissegment an einer verfahrbaren Säule angeordnet ist und wobei das andere Teilkreissegment an einem Portal verfahrbar angeordnet ist. Die Teilkreissegmente ergänzen sich hierbei zu einem Kreisring, wobei die einzelnen Teilkreissegmente jeweils neben der Transporteinrichtung für das stangenförmige Werkstück angeordnet sind. Aufgrund der Ausbildung, dass das eine Teilkreissegment an einer Säule vorgesehen ist, wobei das andere Teilkreissegment an einem Portal angeordnet ist, besteht nun die Möglichkeit, dass die beiden Teilkreissegmente um einen Winkelbetrag verschwenkt auf das Werkstück bzw. hier die Transporteinrichtung einwirken können. So übergreift das an dem Portal angeordnete Teilkreissegment die Transporteinrichtung um ein Bogenmaß von oben her, wobei das an der Säule angeordnete Teilkreissegment die Transporteinrichtung um ein Bogenmaß von unten her untergreift. Es ergibt sich somit für die Verfahrbarkeit der Werkzeuge an den Teilkreissegmenten, dass diese über die Transporteinrichtung hinwegbewegt werden können, sodass eine Bearbeitung des Werkstücks von oben sichergestellt ist. Entsprechendes ergibt sich auch für das andere Teilkreissegment, welches das Werkstück von unten her untergreift. So ist in vorteilhafter Weise das am Portal angeordnete Teilkreissegment auf einem Kreisbogenmaßabschnitt angeordnet, der sich zwischen den Kreiswinkeln von ca. 135 ° bis 315 ° erstreckt, wobei entsprechend gegenüberliegend das an der Säule angeordnete Teilkreissegment in Ergänzung des Kreisringes angeordnet ist also von 315° bis 135°. Denkbar ist auch, dass sich die Teilkreissegmente auf Kreisbogenabschnitten von 20° bis 200° und entsprechend von 200° bis 20° positioniert sein können.

Nach einer vorteilhaften Ausgestaltung der Erfindung ist an den Teilkreissegmenten jeweils ein verfahrbarer Schlitten vorgesehen, an dem ein Motor sowie die Bearbeitungswerkzeuge angeordnet sind. Zum Verfahren der Werkzeuge an den Teilkreissegmenten ist an den außenliegenden Seitenbogen des jeweiligen Teilkreissegmentes ein Zahnriemen gespannt, welches mit einem auf einer Motorachse angeordneten Zahnrad zusammenwirkt. Denkbar sind hierbei auch andere Mittel zur Formschlussverbindung, wie beispielsweise eine gebogene Zahnstange, vorzusehen, um den Schlitten entlang der Bahn zu bewegen.

Der Motor ist hierbei als Servomotor ausgebildet, so dass er für den Vor- oder Rücklauf angesteuert werden kann, um auf diese Weise die Bewegung des Schlittens und somit der Bearbeitungswerkzeuge an dem Teilkreissegment bereitzustellen. Die Motorachse ist mit dem Zahnrad senkrecht zum Teilkreissegment ausgerichtet, wobei jeweils vor und hinter dem Zahnrad Andruckrollen an dem Schlitten für den Zahnstangenriemen gelagert sind. Aufgrund dieser Ausbildung wird der flexibel gehaltene Zahnstangenriemen durch eine Zwangsführung über das Zahnrad an der Motorachse geführt und gehalten. Dies ist nur ein Beispiel einer Antriebsart, welche für den Teilkreisfahrweg eingesetzt werden kann.

In Weiterbildung der Erfindung sind auf dem Schlitten die als Fräser oder Bohrer ausgebildeten Werkzeuge angeordnet, wobei die Werkzeuge an dem Schlitten verfahrbar bzw. verschiebbar angeordnet sind. Infolge ihrer Steuerung können sie nun entsprechend zum Werkstück gefahren werden um dort ihre Arbeitsschritte auszuführen, wobei sie so auf einer vierten Achse gegenüber der X-, Y- und Z-Achse, die durch die Säule oder das Portal vorgegeben sind, verfahren werden können.

### Beschreibung der Zeichnungen

Ein Ausführungsbeispiel der Erfindung ist in den Zeichnungen rein schematisch dargestellt und wird nachfolgend näher beschrieben. Es zeigt:
- Figur 1: eine perspektivische Darstellung der Bearbeitungsvorrichtung gemäß der Erfindung,
- Figur 2: eine Seitenansicht der Bearbeitungseinrichtung gemäß der Figur 1,
- Figur 3: eine perspektivische Darstellung des Antriebs für den verfahrbaren Schlitten und
- Figur 4: eine weitere Darstellung des Antriebs für den Schlitten in einer weiteren Darstellung.

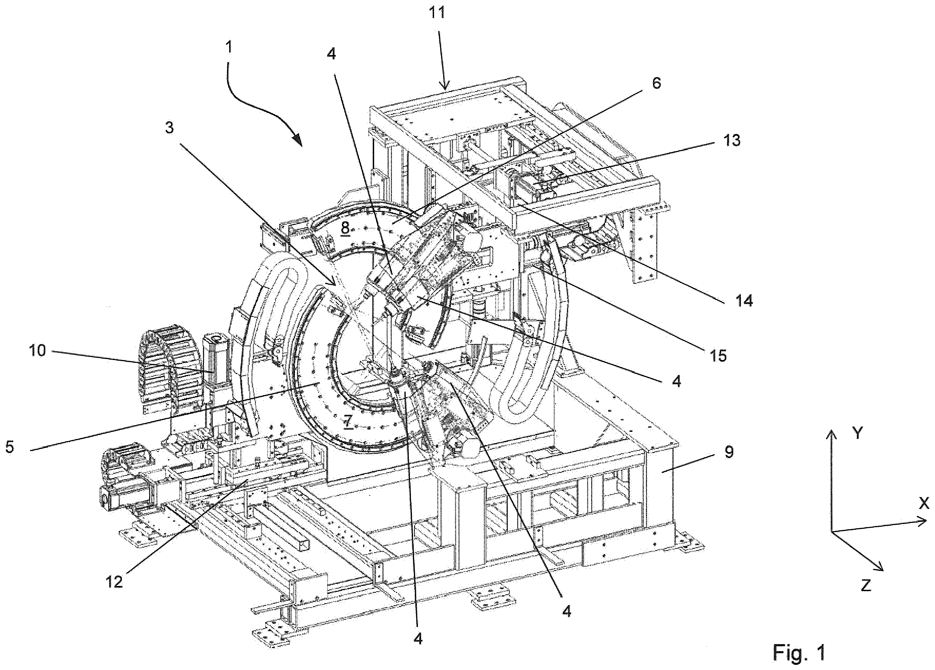

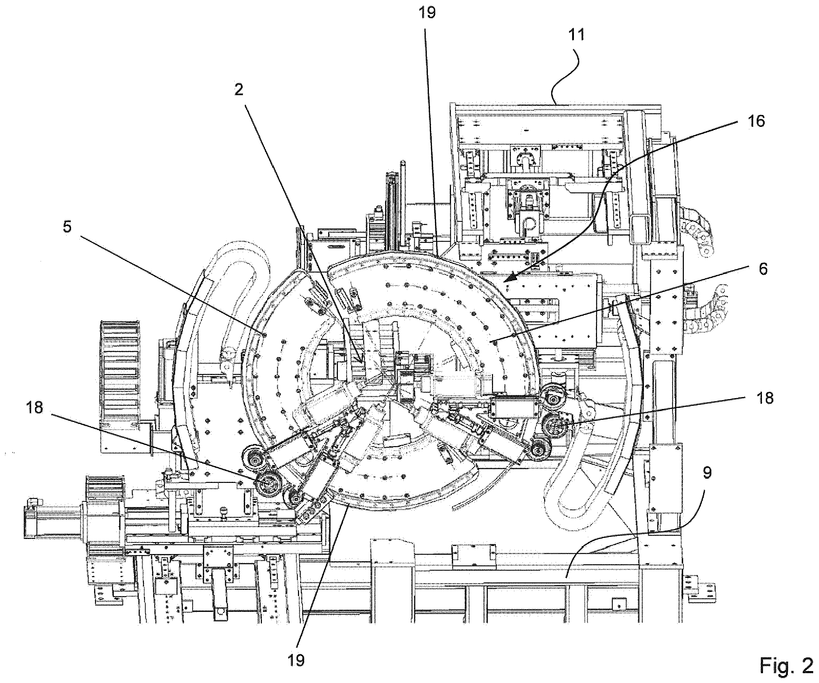

Die Figur 1 zeigt eine Vorrichtung 1 zum Bearbeiten von stangenförmigen Werkstücken, wie beispielsweise nicht näher dargestellte Fensterprofile oder Türprofile, die mittels einer Transporteinrichtung 2 in wenigstens einer horizontalen Ebene, hier der Z- Ebene gemäß Koordinatenkreuz, bewegbar sind. Die Transporteinrichtung 2 ist hier besser in der Figur 2 zu erkennen, wo sie im Zentrum der Vorrichtung 1 dargestellt ist. Die Transporteinrichtung 2 kann hierbei in einer Horizontalebene bewegbar angeordnet, so dass die auf der Transporteinrichtung 2 angeordneten, stangenförmigen Werkstücke durch die Bearbeitungsvorrichtung 1 hindurchgeführt bzw. bewegt werden können. Denkbar sind auch andere Transporteinrichtungen, wie zum Beispiel Transportzangen, die hier nicht näher dargestellt sind. Die Ebene der Transporteinrichtung entspricht hier der Bewegungsrichtung in Z-Richtung, wie dies in dem Koordinatensystem in der Figur 1 näher gekennzeichnet ist.

In einer im Wesentlichen angeordneten senkrechten Ebene zur Bewegungsrichtung der Werkstücke auf der Transporteinrichtung 2 hier der Y-Ebene ist eine Bearbeitungseinrichtung 3 mit Werkzeugen 4 vorgesehen, die in der senkrechten Ebene Y in Bezug zum Werkstück räumlich ausgerichtet ist. Wie insbesondere aus Figur 1 und Figur 2 deutlich zu erkennen ist, besteht die Bearbeitungseinrichtung 3 aus zueinander verstellbaren, auf Ebenen angeordneten Teilkreissegmenten 5 und 6, an deren Teilkreisbogen 7 und 8 die Werkzeuge 4 verfahrbar angeordnet sind. Die einzelnen Teilkreissegmente 5 und 6 sind hierbei jeweils in der X-, Y- und Z-Richtung verfahrbar an einem Gestell 9 der Vorrichtung 1 verfahrbar. Dabei ist das eine Teilkreissegment 5 an einer verfahrbaren Säule 10 und das andere Teilkreissegment 6 an einem Portal 11 verfahrbar angeordnet. Das Teilkreissegment 5 an der Säule 10 ist hierbei jeweils in der Y-Richtung hoch oder runter verfahrbar, wobei es in X-Richtung an bzw. mit der Säule 10 an einem Schlitten 12 verfahren werden kann. Der Schlitten 12 wiederum kann an dem Gestell 9 der Vorrichtung 1 in der Z-Richtung gemäß Pfeil verfahren werden.

Das in dem Portal 11 gehalterte und gelagerte Teilkreissegment 6 wird ebenfalls in allen drei Achsen bewegt, wobei die Z-Achse als oberer Schlitten 13 im oberen Bereich des Portals 11 zu erkennen ist. An dem Schlitten 13 ist eine nach unten ausgerichtete Säule 14 vorgesehen, an der das Teilkreissegment 6 nach oben und unten bewegt werden kann, also in der Y-Richtung. Eine entsprechende horizontal verfahrbare Achse in X-Richtung ist an der nach unten weisenden Säule 14 entsprechend vorgesehen, so dass das Teilkreissegment 6 entsprechend zum Zentrum oder vom Zentrum weg verfahren werden kann.

Wie insbesondere aus der Figur 2 zu erkennen ist, sind die Teilkreissegmente 5 und 6 zu einem Kreisring 16 ergänzend jeweils neben der Transporteinrichtung 2 für das stangenförmige Werkstück angeordnet. Wie insbesondere aus der Figur 2 weiter deutlich zu erkennen, ist das am Portal 11 angeordnete Teilkreissegment 6 auf einem Kreisbogenabschnitt angeordnet, der sich zwischen den Kreiswinkeln von ca. 135 ° bis 315 ° erstreckt, wobei entsprechend gegenüberliegend das an der Säule 10 angeordnete Teilkreissegment 5 in Ergänzung des Kreisrings 16 angeordnet ist. Aufgrund dieser Ausbildung ist es nun möglich, dass die an den Teilkreissegmenten 5 und 6 angeordneten Werkzeuge 4 jeweils das zu bearbeitende Werkstück einmal von oben her überfahren können und entsprechend auch von unten her das Werkstück unterfahren können. Somit können hier die Werkzeuge 4 am Teilkreissegment 6, welches am Portal 11 vorgesehen ist, über die 0°/360°-Grad-Stellung hinaus fahren. Entsprechendes gilt auch für den unteren Teilkreis, wo die Werkzeuge 4 hier über eine 180°-Grad-Stellung hinaus fahren können.

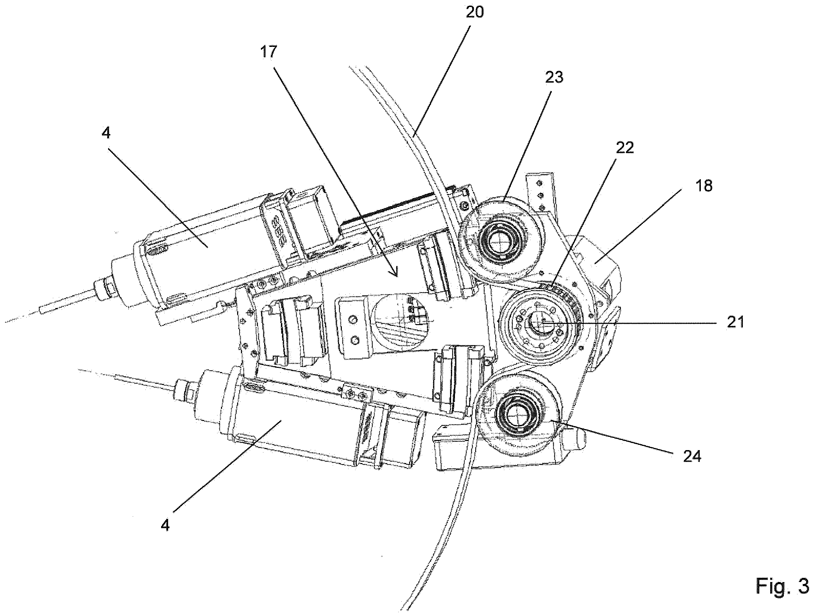

Wie aus den Figuren 1, 2, 3 und 4 jeweils erkennbar ist, ist an den Teilkreissegmenten 5, 6 jeweils ein verfahrbarer Schlitten 17 angeordnet, an dem ein Motor 18 sowie die Werkzeuge 4 angeordnet sind. Wie insbesondere aus der Figur 3 deutlich zu erkennen ist, ist an dem außenliegenden Seitenbogen 19 der Teilkreissegmente 5, 6 jeweils ein Zahnriemen 20 gespannt, welches mit einem auf einer Motorachse 21 angeordneten Zahnrad 22 zusammenwirkt. Die Motorachse 21 ist hierbei mit dem Zahnrad 22 senkrecht parallel zum Teilkreissegment 5, 6 angeordnet. Wie aus der Figur 3 deutlich zu erkennen ist, sind jeweils vor und hinter dem Zahnrad 22 Andruckrollen 23 und 24 an dem Schlitten 17 für den Zahnriemen 20 gelagert. Aufgrund dieser Anordnung ergibt sich eine Zwangsführung des Zahnriemens 20 über das Zahnrad 22 derart, dass beim Auflaufen eine gezielte Führung am Zahnrad 22 erfolgt, wobei beim Ablauf von dem Zahnrad 22 der Zahnriemen 20 sich wieder auf den Seitenbogen 19 der Teilkreissegmente 5, 6 legt.

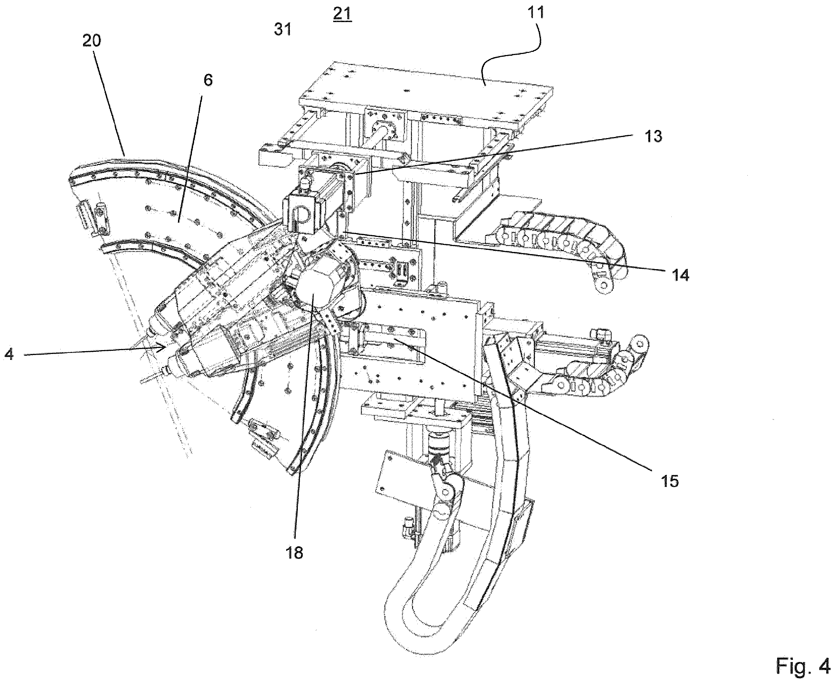

Wie insbesondere aus Figur 3 und 4 zu erkennen ist, sind auf dem Schlitten 17 die als Fräser oder Bohrer ausgebildeten Werkzeuge 4 angeordnet. Wie weiter zu erkennen ist, sind die Werkzeuge 4 hierbei an dem Schlitten 17 zur Zentrumsachse verfahrbar bzw. verschiebbar gelagert.

Somit ergibt sich für den Freiheitsgrad des einzelnen Werkzeugs 4 eine vierachsige Bearbeitungsstation, wobei einmal die drei Achsen des räumlichen Koordinatensystems hier zum Tragen kommen, aufgrund der Halterung der einzelnen Teilkreissegmente 5, 6 sei es an der Säule 10 oder am Portal 11, wobei durch das Verfahren bzw. das Verschieben des Werkzeugs 4 an dem Teilkreissegment 5, 6 die vierte Achse in unterschiedlichen Stellungen zum Werkstück und hier insbesondere in unterschiedlichen Winkellagen zum Werkstück ermöglicht wird.

### Bezugszeichenliste

- 01: Vorrichtung
- 02: Transporteinrichtung
- 03: Bearbeitungseinrichtung
- 04: Werkzeuge
- 05: Teilkreissegment
- 06: Teilkreissegment
- 07: Teilkreisbogen
- 08: Teilkreisbogen
- 09: Gestell
- 10: Säule
- 11: Portal
- 12: Schlitten
- 13: Schlitten
- 14: Säule nach unten gerichtet
- 15: Horizontale Achse
- 16: Kreisring
- 17: Schlitten Werkzeug
- 18: Motor
- 19: Seitenbogen
- 20: Zahnriemen
- 21: Motorachse
- 22: Zahnrad
- 23: Andruckrolle
- 24: Andruckrolle

## Patentansprüche

1. Vorrichtung (1) zum Bearbeiten von stangenförmigen Werkstücken wie Fensterprofilen oder Türprofilen, die mittels einer Transporteinrichtung (2) in wenigstens einer horizontalen Ebene bewegbar sind, und wobei in einer im Wesentlichen senkrecht angeordneten Ebene zur Bewegungsrichtung der Werkstücke eine Bearbeitungseinrichtung (3) mit Werkzeugen (4) vorgesehen ist, die in der senkrechten Ebene in Bezug zum Werkstück räumlich ausgerichtet ist wobei die Bearbeitungseinrichtung (3) aus in senkrechten zueinander verstellbaren Ebenen angeordneten Teilkreissegmenten (5) und (6) besteht, an dessen Teilkreisbögen (7) und (8) die Werkzeuge (4) verfahrbar angeordnet sind, und die einzelnen Teilkreissegmente (5), (6) jeweils in der X-, Y- und Z- Richtung verfahrbar sind und wobei das eine Teilkreissegment (5) an einer verfahrbaren Säule (10) und das andere Teilkreissegment (6) in einem Portal (11) verfahrbar angeordnet ist, so dass die Teilkreissegmente (5) und (6) sich zu einem Kreisring (16) ergänzend jeweils neben der Transporteinrichtung (2) für das stangenförmige Werkstück angeordnet sind.

2. Vorrichtung nach Anspruch 1,
**dadurch gekennzeichnet,**
**dass** das am Portal (11) angeordnete Teilkreissegment (6) auf einem Kreisbogenmaßabschnitt angeordnet ist, der sich zwischen den Kreiswinkel von ca. 135° bis 315° oder von 20° bis 200° erstreckt, wobei entsprechend gegenüberliegend das an der Säule (10) angeordnete Teilkreissegment (5) in Ergänzung des Kreisringes (16) angeordnet ist.

3. Vorrichtung nach den Ansprüchen 1 bis 2,
**dadurch gekennzeichnet,**
**dass** an den Teilkreissegmenten (5, 6) jeweils ein verfahrbarer Schlitten (17) angeordnet ist, an dem ein Motor (18) sowie die Bearbeitungswerkzeuge (4) angeordnet sind.

4. Vorrichtung nach den Ansprüchen 1 bis 3,
**dadurch gekennzeichnet,**
**dass** an den außenliegenden Seitenbögen (19) der Teilkreissegmente (5, 6) Mittel zum Formschluss mit dem Motor (18) vorgesehen sind.

5. Vorrichtung nach den Ansprüchen 1 bis 4,
**dadurch gekennzeichnet,**
**dass** an den außenliegenden Seitenbögen (19) vorzugsweise jeweils ein Zahnriemen (20) gespannt ist, welcher mit einem auf einer Motorachse (21) angeordneten Zahnrad (22) zusammenwirkt.

6. Vorrichtung nach Anspruch 5,
**dadurch gekennzeichnet,**
**dass** die Motorachse (21) mit dem Zahnrad (22) senkrecht zum Teilkreissegment (5, 6) angeordnet ist.

7. Vorrichtung nach den Ansprüchen 5 bis 6,
**dadurch gekennzeichnet,**
**dass** jeweils vor und hinter dem Zahnrad (22) Andruckrollen (23) und (24) an dem Schlitten (17) für den Zahnriemen (20) gelagert sind.

8. Vorrichtung nach den Ansprüchen 1 bis 7,
**dadurch gekennzeichnet,**
**dass** auf dem Schlitten (17) die als Fräser oder Bohrer ausgebildeten Werkzeuge (4) angeordnet sind.

9. Vorrichtung nach den Ansprüchen 1 bis 8,
**dadurch gekennzeichnet,**
**dass** die Werkzeuge (4) an dem Schlitten (17) zur Zentrumsachse verfahrbar bzw. verschiebbar sind.

## Claims

1. A device (1) for machining post-shaped workpieces such as window profiles or door profiles which by means of a transporting device (2) are movable in at least a horizontal plane and wherein provided in a plane arranged essentially perpendicularly to the direction of movement of the workpieces is a machining device (3) with tools (4), which is spatially arranged in the perpendicular plane in relation to the workpiece, wherein
the machining device (3) comprises partial circular segments (5) and (6) arranged in planes adjustable perpendicularly with regard to each other, on the partial circle arcs (7) and (8) of which the tools (4) are displaceably arranged and the individual partial circle segments (5), (6) can each be displaced in the X, Y and Z direction,
and wherein one partial circle segment (5) is arranged on a displaceable column (10) and the other partial circle segment (6) is displaceably arranged in a portal (11) so that the partial circle segments (5) and (6), complementing each other to form a circular ring (16), are respectively arranged next to the transporting device (2) for the post-shaped workpiece.

2. The device according to claim 1,
**characterised**
**in that** the partial circle segment (6) arranged on the portal (11) is arranged on a circular arc measurement section which extends between the inscribed angle of approximately 135° to 315° or from 20° to 200°, wherein the partial circle segment (5) arranged on the column (10) is arranged correspondingly opposite to form the circular ring (16).

3. The device according to claims 1 to 2,
**characterised**
**in that** on each of the partial circle segments (5, 6) a displaceable sled (17) is arranged on which a motor (18) and the machining tools (4) are arranged.

4. The device according to claims 1 to 3,
**characterised**
**in that** on the outer side arcs (19) of the partial circle segments (5, 6) means for positively connecting with the motor (18) are provided.

5. The device according to claims 1 to 4,
**characterised**
**in that** on preferably on each of the outer side arcs (19) a toothed belt (20) is tensioned which interacts with a toothed wheel (22) arranged on a motor axle (21) .

6. The device according to claim 5,
**characterised**
**in that** the motor axle (21) with the toothed wheel (22) is arranged perpendicularly to the partial circle segment (5, 6).

7. The device according to claims 5 to 6,
**characterised**
**in that** both before and behind the toothed wheel (22) press-on rollers (23) and (24) are borne on the sled (17) for the toothed belt (20).

8. The device according to claim 1 to 7,
**characterised**
**in that** the tools (4) configured as cutters or drills are arranged on the sled (17).

9. The device according to claims 1 to 8,
**characterised**
**in that** the tools (4) on the sled (17) are displaceable or slidable to the centre axis.

## Revendications

1. Dispositif (1), destiné à l'usinage de pièces à usiner en forme de barres, telles que des profilés de fenêtre ou des profilés de porte, qui au moyen d'un système de transport (2) sont déplaçables dans au moins un plan horizontal, et dans un plan placé sensiblement à la perpendiculaire de la direction de déplacement des pièces à usiner étant prévu un système d'usinage (3) muni d'outils (4), qui est orienté dans l'espace à la perpendiculaire par rapport à la pièce à usiner,
le système d'usinage (3) étant constitué de segments de cercle partiels (5) et (6) placés dans des plans réglables les uns par rapport aux autres à la perpendiculaire, sur les arcs de cercle partiels (7) et (8) desquels, les outils (4) sont placés en étant déplaçables, et les segments de cercle partiels (5), (6) individuels étant déplaçables chacun dans la direction X, Y et Z,
l'un segment de cercle partiel (5) étant placé en étant déplaçable sur une colonne (10) et l'autre segment de cercle partiel (6) étant placé en étant déplaçable sur un portique (11), de telle sorte que les segments de cercle partiels (5) et (6) soient placés de manière à se compléter en un anneau circulaire (16) chaque fois à côté du système de transport (2) pour la pièce à usiner en forme de barre.

2. Dispositif selon la revendication 1,
**caractérisé**
**en ce que** le segment de cercle partiel (6) placé sur le portique (11) est placé sur une portion dimensionnelle de l'arc de cercle qui s'étend entre les angles de cercle d'environ 135° à 315° ou de 20° à 200°, le segment de cercle partiel (5) placé sur la colonne (10) étant placé au vis-à-vis en correspondance, pour compléter l'anneau circulaire (16)

3. Dispositif selon l'une quelconque des revendications 1 ou 2,
**caractérisé**
**en ce que** sur les segments de cercle partiels (5, 6) est placé chaque fois un chariot (17) déplaçable sur lequel sont placés un moteur (18), ainsi que des outils d'usinage (4).

4. Dispositif selon les revendications 1 à 3,
**caractérisé**
**en ce que** sur les arcs latéraux (19) externes des segments de cercle partiels (5, 6) sont prévus des moyens de complémentarité de forme avec le moteur (18) .

5. Dispositif selon les revendications 1 à 4,
**caractérisé**
**en ce que** sur les arcs latéraux (19) partiels est tendue chaque fois une courroie dentée (20) qui coopère avec une roue dentée (22) placée sur un axe du moteur (21).

6. Dispositif selon la revendication 5,
**caractérisé**
**en ce que** l'axe du moteur (21) pourvu de la roue dentée (22) est placé à la perpendiculaire du segment de cercle partiel (5, 6).

7. Dispositif selon les revendications 5 à 6,
**caractérisé**
**en ce que** chaque fois à l'avant et à l'arrière de la roue dentée (22), des galets presseurs (23) et (24) sont logés sur le chariot (17) pour la courroie dentée (20) .

8. Dispositif selon les revendications 1 à 7,
**caractérisé**
**en ce que** sur le chariot (17) sont placés les outils (4) conçus sous la forme de fraises ou de forets.

9. Dispositif selon les revendications 1 à 8,
**caractérisé**
**en ce que** les outils (4) sont déplaçables ou translatables sur le chariot (17) en direction de l'axe central.
